# EUROPEAN PATENT SPECIFICATION

(11) **EP 3 895 533 B1**
(45) Date of publication and mention of the grant of the patent: **10.07.2024**
(21) Application number: 21153845.9
(22) Date of filing: 27.01.2021
(51) Int. Cl.: A01M 23/00, A01M 23/02, A01M 23/08, A01M 23/14

(54) **ANIMAL TRAP**
TIERFALLE
PIÈGE À ANIMAUX

(30) Priority: 17.04.2020 US 202063011546 P; 30.10.2020 US 202017084944
(43) Date of publication of application: 20.10.2021
(73) Proprietor: Field Engine Wildlife Research and Management LLC, Moodus, CT 06469 (US)
(72) Inventor: DENICOLA, Anthony J., Moodus, CT Connecticut 06469 (US)
(74) Representative: Dehns

(56) References cited:
- JP-U- S56 141 088
- US-A- 5 063 876
- US-A1- 2009 293 340
- US-A1- 2011 167 709
- US-A1- 2019 208 764

## Description

### BACKGROUND OF THE INVENTION

### 1. Technical Field

The present disclosure relates to animal traps in general, and to net animal traps in particular.

### 2. Background Information

Feral swine are a destructive invasive species in many areas of the world. In the United States alone, it is estimated that two to six million feral hogs are currently present in at least thirty-nine states, and do millions of dollars in damage every year. Feral swine are prodigious breeders and in many areas have few or no natural predators.

Feral swine damage crops by consuming them or by their rooting, trampling, and wallowing behaviors. Field crops commonly targeted by feral swine include sugar cane, corn, grain sorghum, soy beans, wheat, oats, peanuts, and rice; however, they will eat almost any crop. Farmers may also experience damage to vegetable and fruit crops such as lettuce, spinach, melons, and pumpkins. Feral swine damage pasture grasses, killing desirable plant species. The decimation of these desirable plant species can, in turn, facilitate the proliferation of undesired weed species. Feral swine can also devastate orchards and vineyards by consuming fruit, berries, citrus, grapes, and nuts, destroy saplings and vines by roughly rubbing on the plants with their bodies (which they do to remove parasites from their skin), and damage large trees by scraping bark off with their tusks to mark territory, creating an entry point for diseases on the tree.

Feral swine compete with native wildlife for multiple resources, specifically food, habitat, and water. Feral swine diets overlap with those of native wildlife, such as bear, deer, and turkey, which results in competition for important and limited natural food supplies. Feral swine activity will often deter other species from living in an area, resulting in competition over prime habitat. Feral swine also prey directly on the nests, eggs, and young of native ground nesting birds and reptiles, including threatened or endangered species. Game birds such as wild turkeys, grouse, and quail are often negatively affected. Feral swine wallows are prime mosquito habitat which contributes to the prevalence of various mosquito-borne diseases. Wallows can also be a place of transmission for bacteria and parasites from feral swine to native wildlife that come to drink.

Feral swine are known to carry at least thirty (30) viral and bacterial diseases and nearly forty (40) parasites that can be transmitted to humans, pets, livestock, and other wildlife. Feral swine can pass pathogens in many ways; e.g., by direct contact with feral swine or their scat, via feed and water sources previously contaminated by feral swine, or by eating raw, infected feral swine meat, organs, or other tissues.

Efforts to control feral swine populations to date have been largely ineffective. The ability of feral swine to reproduce outpaces conventional hunting techniques, and very often landowners or local regulations do not permit hunting. Various traps are known, but none of these traps are capable of readily being used in all settings and therefore are limited. For example, feral swine are often present in remote areas, not easily accessible by vehicle. Box traps are typically large, heavy structures not easily carried, if at all, to a remote location. Indeed, the size and weight of box traps often not only limits where they can be utilized, but also how many swine may be caught therein. In some instances, box traps may be disassembled for transport, but then must be reassembled in the field - but the overall weight of the trap does not change. Box traps also typically have an elaborate door mechanism that permits ingress, but no exit, or remotely controlled doors that require a user to monitor the trap (e.g., via camera). US 2011/0167709 A1 discloses a trap which can comprise: an enclosure having an opening through which at least one animal can pass to enter the enclosure; a gate, moveable between and open position and a closed position, positioned therein the at least one opening; and a means for triggering the gate which moves the gate from the open position to the closed position.

Some corral traps formed from stiff wire fencing may overcome the shortcomings of box traps, but they too have their own shortfalls. Although lighter than box traps, and typically larger than box traps, corral traps can also be prohibitively heavy and difficult to transport. The time required to set up stiff wire corral traps is typically significant, often requires some amount of environment clearance to enable the stiff wire fencing to be installed, and may be limited to use on flat ground areas. Like box traps, corral traps also typically utilize elaborate door mechanisms. US 5,063,876 discloses a rope corral for training and containing animals. JP S56 141088 discloses an animal capture apparatus comprising a net.

Other efforts to control feral swine populations utilize ingestible poisons. The use of poisons is often frowned upon for fear that native wildlife or domestic animals will either directly ingest the poison or will ingest the poison from a feral pig who earlier ingested the poison.

What is needed is a trap system and methodology that overcomes the shortfalls of currently available traps, and in particular a trap system and methodology that can be used for animals other than feral swine.

### SUMMARY

There is disclosed herein an animal trap net structure . The net structure includes a net and an upper cord. The net is formed from spaced apart orthogonal members that define openings between the members. The net has a width that extends between an upper lateral edge and a lower lateral edge, and a first length that extends between a first lengthwise end and a second lengthwise end at the upper lateral edge, and a second length that extends between the first lengthwise end and the second lengthwise end at the lower lateral edge. The second length is less than the first length. The upper cord is attached to the net at the upper lateral edge extending the first length of the net.

In any of the aspects or embodiments described above and herein, the net structure may include a bottom cord attached to the net at the lower lateral edge and extending the second length of the net.

In any of the aspects or embodiments described above and herein, the bottom cord may be a weighted cord having a lead core.

In any of the aspects or embodiments described above and herein, the net structure may include a mid-cord attached to the net, the mid-cord extending lengthwise between the first lengthwise end and a second lengthwise end, and disposed widthwise between the upper cord and the bottom cord.

In any of the aspects or embodiments described above and herein, wherein the net structure includes a plurality of rib cords, each extending lengthwise between the upper lateral edge and the lower lateral edge, the rib cords spaced apart from one another along the length of the net.

According to the invention, a trap for trapping animals on the ground as defined by claim 1 is provided.

In the set configuration the net structure has a wall portion and ground portion, and the ground portion is configured to reside on the ground surface.

In any of the aspects or embodiments described above and herein, the ground portion has a width and the ground portion width is about 25% - 40% of the width of the net structure.

The trap includes one or more anchoring devices for securing the lower lateral edge of the net structure to the ground surface. A non-limiting example of an anchoring device is an anchor stake configured to couple the lower lateral edge of the net structure with the ground surface.

In any of the aspects or embodiments described above and herein, the net structure may include a weighted bottom cord attached to the net at the lower lateral edge extending the second length of the net structure, and the weighted bottom cord may include a lead core.

In any of the aspects or embodiments described above and herein, the net structure may include a mid-cord attached to the net. The mid-cord extending lengthwise between the first lengthwise end and a second lengthwise end, and disposed widthwise between the upper cord and the bottom cord.

In any of the aspects or embodiments described above and herein, the net structure may include a plurality of rib cords, each rib cord extending lengthwise between the upper lateral edge and the lower lateral edge. The rib cords may be spaced apart from one another along the length of the net.

In any of the aspects or embodiments described above and herein, the trap may include a plurality of tensioning structures. Each tensioning structure may be configured to apply an outwardly radial force to a respective post.

In any of the aspects or embodiments described above and herein, the trap may include an upper edge panel attached to the net structure proximate the upper lateral edge, the upper edge panel extending radially inwardly a distance.

According to the invention, a method of trapping an animal as defined by claim 6 is provided.

In any of the aspects or embodiments described above and herein, the ground portion has a width and the ground portion width may be about 25% - 40% of the width of the net structure.

In any of the aspects or embodiments described above and herein, the method further including anchoring the lower lateral edge of the net structure to the ground surface, for example by inserting anchor stakes into the ground surface adjacent the lower lateral edge. The anchor stakes are configured to couple the lower lateral edge of the net structure with the ground surface, and configured to allow the lower lateral edge to travel vertically up the respective anchor stakes a distance great enough to allow an animal to pass under the net structure and into the interior region of the trap and to fall back to the ground surface after the animal has passed under the net structure and into the interior region of the trap.

In any of the aspects or embodiments described above and herein, the method further including disposing the net structure in a pre-set configuration prior to disposing the net structure in the set configuration, and in the pre-set configuration at least a portion of the net structure ground portion is held off of the ground surface thereby providing at least one passage into and out of the interior region of the trap.

In any of the aspects or embodiments described above and herein, wherein the net structure further comprises a mid-cord attached to the net, extending lengthwise between the first lengthwise end and a second lengthwise end, and disposed widthwise between the upper lateral edge and a lower lateral edge. In the set configuration, the upper cord and the mid-cord are attached to the plurality of posts, and the net is curved radially inwardly from the mid-cord to the ground portion.

In any of the aspects or embodiments described above and herein, the method further including: a) providing a plurality of tensioning structures; b) attaching the tensioning structures to the plurality of posts; and c) applying an outwardly radial force to a respective post using a respective one of the tensioning structures sufficient to produce tension in the upper cord.

The foregoing features and the operation of the present disclosure will become more apparent in light of the following description and the accompanying drawings.

### BRIEF DESCRIPTION OF THE DRAWINGS

FIG. 1 is a diagrammatic perspective view of a present disclosure animal trap embodiment.
FIG. 2 is a diagrammatic top view of a present disclosure animal trap embodiment.
FIG. 3 is a diagrammatic view of a present disclosure net structure embodiment.
FIG. 3A is a diagrammatic view of a present disclosure net structure embodiment.
FIG. 4 is a diagrammatic partial view of a present disclosure net structure embodiment.
FIG. 5 is a diagrammatic side view of a portion of a present disclosure animal trap embodiment.
FIG. 6 is a diagrammatic side view of a portion of a present disclosure animal trap embodiment.
FIG. 7 is a diagrammatic view of a tensioning structure hardware embodiment, illustrating an upper cord engaged with the hardware.
FIG. 8 is a diagrammatic partial view of a present disclosure net structure embodiment, illustrating lengthwise ends coupled together.
FIG. 9 is a diagrammatic view of a tensioning structure hardware embodiment.
FIG. 10 diagrammatically illustrates an upper corner of the net structure looped around a post, engaged with tensioning structure hardware.
FIG. 11 diagrammatically illustrates both upper corners of the net structure looped around a post, engaged with tensioning structure hardware.
FIG. 12 diagrammatically illustrates an upper edge panel embodiment.
FIG. 13 diagrammatically illustrates an upper edge panel embodiment.
FIG. 14 diagrammatically illustrates an embodiment of the present disclosure trap having a structural ring.
FIG. 15 illustrates an anchor stake embodiment securing a lower lateral edge of the net structure.
FIG. 16 illustrates a plurality of anchor stakes securing the lower lateral edge of a net structure in a central location of the trap.
FIGS. 17 and 18 illustrate a tool for location posts.
FIG. 19 diagrammatically illustrates a present disclosure animal trap in a pre-set configuration.

### DETAILED DESCRIPTION

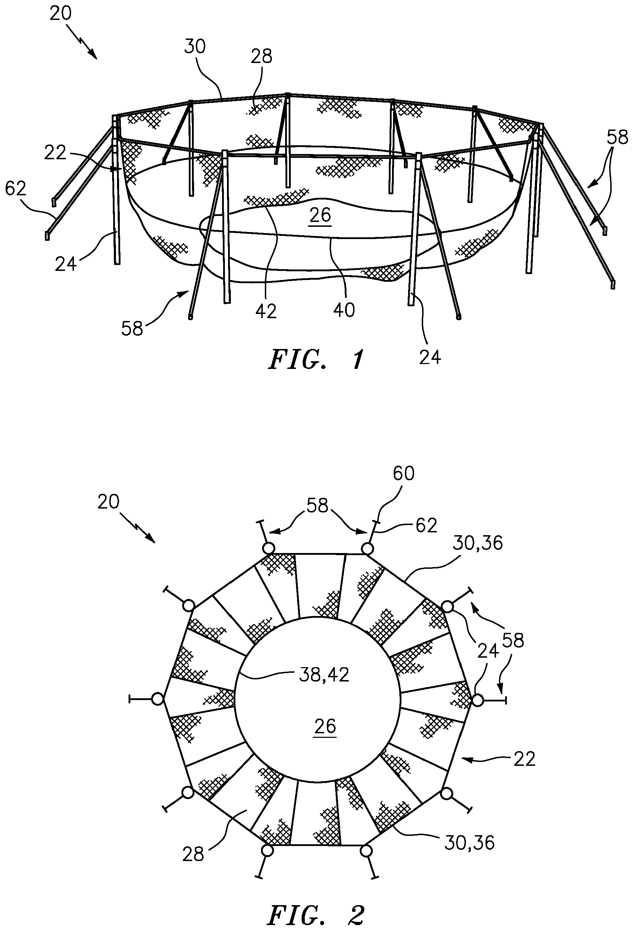

FIGS. 1 and 2 illustrate an exemplary embodiment of an animal trap 20 according to the present disclosure. The animal trap 20 embodiment includes a net structure 22. Some embodiments of the animal trap include a plurality of posts 24 as part of the trap 20. When the animal trap 20 is set up to trap animals (i.e., in a "set configuration"), the net structure 22 is configured as a closed structure that defines a trap interior region 26; i.e., the net structure 22 is continuous around the circumference of the trap 20. More specifically, in the set configuration, a portion of the net structure 22 is in contact with the ground, and the remainder of the net structure 22 extends upwardly from the ground, forming a closed wall structure. The term "closed structure" is used herein to mean that the net structure 22 extends continuously around the entire perimeter of the trap 20, with no door, gate, or opening that permits animal ingress or egress. As will be described herein, embodiments of the present animal trap 20 may be configured with a substantially circular structure, with the net structure 22 in the set configuration having a first circumference at an upper lateral edge and a second circumference at a lower lateral edge disposed on the ground. The second circumference is smaller than the first circumference. In some embodiments, the vertical top of the animal trap 20 is open.

The net structure 22 includes a net 28 and an upper cord 30. The net structure 22 has a length extending between a first lengthwise end 32 and a second lengthwise end 34, and a width extending between an upper lateral edge 36 and a lower lateral edge 38. The upper cord 30 is disposed along the upper lateral edge 36 and extends lengthwise between the first and second lengthwise ends 32, 34. The size and material of the upper cord 30 can vary depending on the application. For many applications, the upper cord 30 may comprise a polymeric material such as polypropylene, nylon, polyester, polyethylene, aramid, or the like, and any combination thereof. Alternatively, the upper cord 30 may comprise natural fibers such as hemp. Generally speaking, an upper cord 30 comprising polymeric material is preferred because of its superior strength, resistance to degradation, and light weight. A specific non-limiting example of an upper cord 30 is a high-density polypropylene cord having a diameter in the range of about 0.25 inches to about 1.0 inches (0.25 - 1.0 inches; 6.35mm - 25.4mm). The present disclosure is not, however, limited to any particular upper cord material or construction.

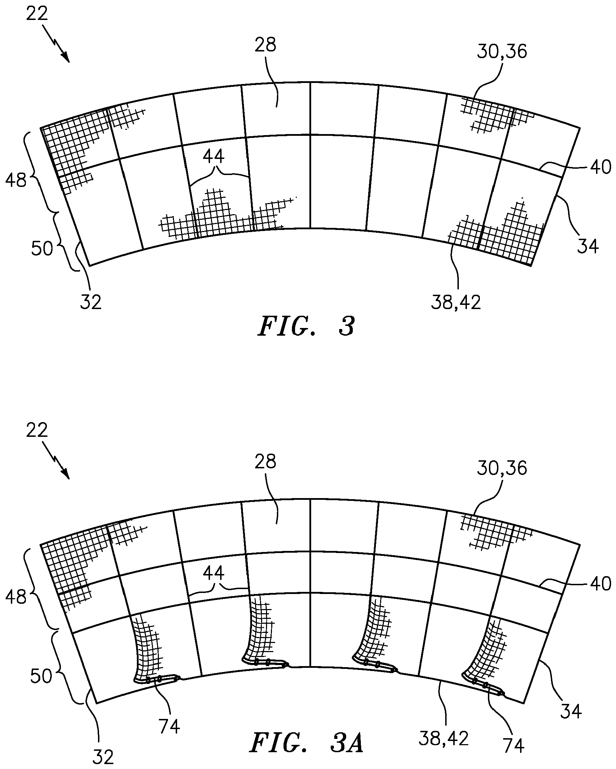

Referring to FIGS. 1, 3 and 3A, in some embodiments the net structure 22 may include a mid-cord 40 disposed in a middle region of the net 28 (i.e., between the upper lateral edge 36 and the lower lateral edge 38, and therefore spaced apart from the upper cord 30), extending lengthwise between the first and second lengthwise ends 32, 34. The term "mid-cord" should not be interpreted as implying that the mid-cord 40 is located at the geometric middle point of the width of the net 28. Typically in those embodiments that include a mid-cord 40, the upper cord 30 and the mid-cord 40 extend lengthwise generally parallel to one another. The size and material of the mid-cord 40 may be as described above for the upper cord 30. The mid-cord is not required to be the exact same size and material as the upper cord 30, however.

In some embodiments, the net structure 22 may include a bottom cord 42 attached to the net 28 along the lower lateral edge 38. The size and material of the bottom cord 42 may be as described above for the upper cord 30. In preferred embodiments, the bottom cord 42 may have a weight per unit length that is greater than the weight per unit length of the upper cord 30. A non-limiting example of an acceptable bottom cord 42 is a weighted cord having a lead core.

In some embodiments, the net structure 22 may include a plurality of widthwise extending rib cords 44 (e.g., extending widthwise between the upper lateral edge 36 and the lower lateral edge 38) spaced apart from one another at lengthwise positions. A rib cord 44 may be disposed at each lengthwise end 32, 34 of the net structure 22. The size and material of a rib cord 44 may be as described above for the upper cord 30. The rib cords 44 are not required to be the exact same size and material as the upper cord 30, however.

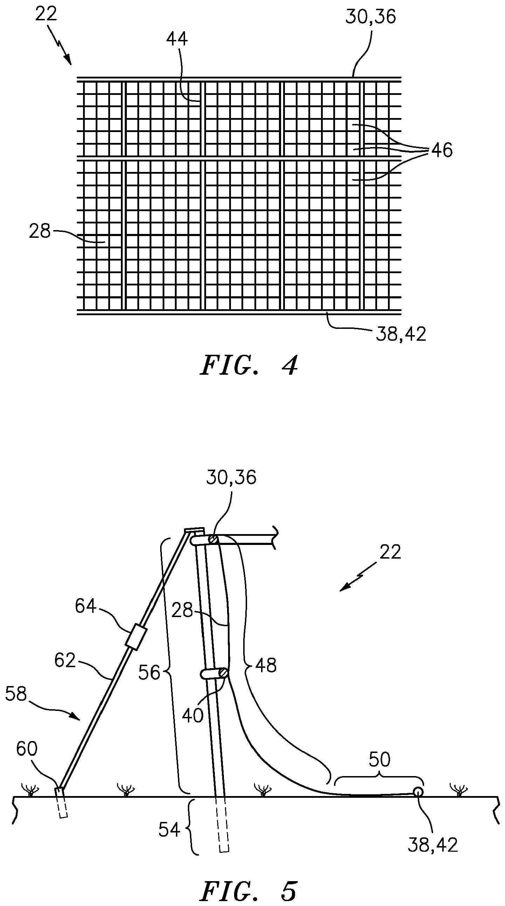

Referring to FIGS. 3, 3A, and 4, the net 28 is a mesh structure formed from a plurality of flexible lines that are connected to one another in a pattern that creates openings 46 between adjacent lines. The lines are attached to one another to one another to fix the size of the openings 46. The lines within the net 28 may be orthogonally arranged (e.g., vertically extending lines and horizontally extending lines), but the present disclosure is not limited to nets having orthogonal lines. The openings 46 within the net 28 are large enough so that the net 28 does not substantially obstruct vision through the net 28, but small enough to prevent the trapped animal from escaping through the openings 46. The net 28 is configured to withstand impacts by the animal being trapped (as will be described below), and is preferably also sufficiently durable to prevent a trapped animal from chewing or otherwise cutting through the net 28 during a period of time in which the animal is expected to be trapped. The net 28 may comprise polymeric materials such as polypropylene, nylon, polyester, polyethylene, aramid, and the like, or combinations thereof. Alternatively, the net 28 may comprise natural fibers such as hemp. Generally speaking, polymeric nets are preferred because of their superior strength, resistance to degradation, and light-weight. The present disclosure is not, however, limited to any particular net 28 material or construction. Non-limiting examples of acceptable nets 28 include some nets of the type constructed for use as baseball nets, or golf ball nets, or in some instances fishing nets. For a net structure 22 configured for trapping feral swine, a net 28 comprising a twine size in the range of #18 - #96 twine (i.e., a twine diameter range of about 1.5mm to about 4.0mm, or about 0.06 inches to about 0.158 inches), and having openings 46 in the range of about 0.75 inches (19.0 mm) to about 2.0 inches (50.8 mm) is typically acceptable. The present disclosure is not limited to these exemplary twine diameter and opening range values. The specific characteristics of the net 28 may depend on the application at hand, and the net 28 materials being used; e.g., a net twine having a greater tensile strength may permit a smaller diameter twine, etc.

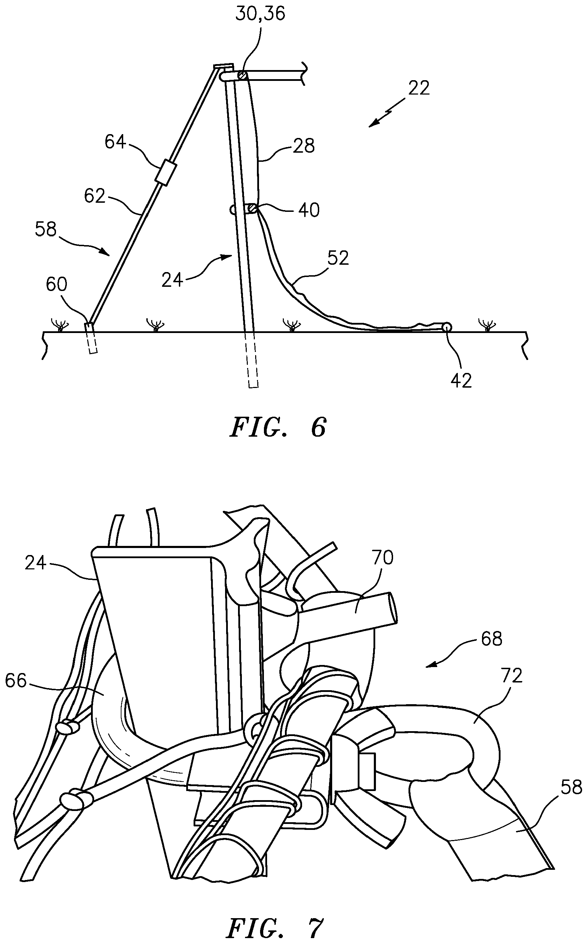

Referring to FIGS. 5 and 6, the net structure 22 may be described as having a wall portion 48 and a ground portion 50. In the set configuration, the wall portion 48 is disposed above the ground and therefore not in contact with the ground. The ground portion 50, in contrast, is disposed in contact with the ground when the net structure 22 is in the set configuration. The width of the ground portion 50 of the net structure 22 is great enough such that when an animal in the interior region of the trap approaches the wall portion 48, that animal will step on the ground portion 50. The weight of the animal stepping on the ground portion 50 as it approaches the wall portion 48 helps to anchor the net structure 22 to the ground and prevent the animal from escaping from the trap 20. In terms of the entire width of the net structure 22, the ground portion 50 is typically about 25-40% of the width of the net structure 22. Embodiments of the present disclosure trap 20 that are configured to trap feral swine, for example, typically have a net structure ground portion 50 that is about twenty-four to about thirty-six inches (24-36"; 610-915mm) wide when the trap 20 is in a set configuration, and an overall net structure width of about ninety to ninety-six inches (90-96 inches; 2280mm - 2440mm). The present disclosure is not limited to any particular wall portion 48 height, and therefore not limited to any overall net structure 22 width.

In some embodiments, the entirety of the net 28 has a uniform configuration; e.g., the same twine size, material, and opening size throughout the entire net 28. In alternative embodiments, the net 28 may include two or more regions each having a different net configuration; e.g., a first net region having a first net configuration, and a second net region having a second net configuration, where the second net configuration is different from the first net configuration. For example, a net structure 22 that includes a mid-cord 40 may include a first net configuration disposed between the mid-cord 40 and the upper lateral edge 36 / upper cord 30, and a second net configuration disposed between the mid-cord 40 and the lower lateral edge 38 / bottom cord 42. To prevent escape by even the smallest animals (e.g., piglets) and/or to facilitate ingress into the trap 20, the second net configuration (including the ground portion 50 of the net structure) may comprise smaller openings 46 and lighter twine than a first net configuration that predominates the wall portion 48 of the net structure. The smaller net openings 46 can be selected to minimize the possibility of the animal becoming entangled in the net 28 (e.g., in terms of a feral pig, getting a hoof or a snout stuck in an opening 46).

In some embodiments the net structure 22 may include a secondary wall portion 52 (i.e., an additional wall portion) that is attached to the net structure 22 between the upper and lower lateral edges 36, 38 (e.g., at the mid-cord 40 if one is included), and extends downwardly toward the lower lateral edge 38; e.g., the secondary wall portion 52 may rest on the net 28, including the ground portion 50, extending widthwise to the lower lateral edge 38, and lengthwise between the first and second lengthwise ends 32, 34 - see FIG. 6. In those embodiments wherein the net structure 22 includes a secondary wall portion 52, the net opening 46 size of the secondary wall portion 52 may be smaller than the net opening 46 size of the adjacent net. In such an embodiment, the heavier twine size of the net 28 provides desirable strength to withstand impact forces, and the lighter twine size and smaller openings 46 of the secondary lower wall region 52 helps avoid the animal entanglement (e.g., hoof or snout entanglement, etc.). Furthermore, a secondary lower wall region 52 with a lighter twine size and smaller openings 46 also typically possesses greater drapability and facilitates maintaining the ground portion 50 in contact with the ground to prevent captured feral swine from escaping.

The upper cord 30 (and one or more of the mid-cord 40, bottom cord 42, and rib cords 44 where included) may be connected to the net 28 in a variety of different ways. For example, the upper cord 30 (and other cords 40, 42, 44 as included) may be attached to the net 28 by sewn attachment; e.g., the net 28 may be configured with integral twines that attach the net 28 to the upper cord 30 (e.g., see FIG. 7). A sewn connection between the cords 30, 40, 42, 44 and the net 28 is advantageous for several reasons; e.g., it does not require any independent fasteners, and can often be implemented during construction of the net structure 22. The present disclosure is not, however, limited to a net structure 22 having cords 30, 40, 42, 44 attached to the net 28 by sewn attachment. For example, any of the cords 30, 40, 42, 44 may be independent of the net 28 and may be attached to the net 28 by mechanical fasteners. Still further, any of the cords 30, 40, 42, 44 may be independent of the net 28 and weaved through the net 28 to create the connection there between.

Referring to FIGS. 5 and 5, in those trap 20 embodiments that include posts 24, the posts 24 are configured to support the net structure 22 above the ground, and to be anchored within the ground. Each post 24 may therefore be described as having a length that includes a first lengthwise portion 54 (for disposal within the ground when installed) and a second lengthwise portion 56 (for disposal above the ground when installed). The overall length of each post 24 is chosen so that the first lengthwise portion 54 is long enough to securely mount the post 24 in the ground, and the second lengthwise portion 56 is long enough to hold the net structure 22 at a height where the animal to be trapped is unable to escape over the net structure 22. A non-limiting example of an acceptable post 24 is a metal post possessing sufficient mechanical strength to support the net structure 22 during use. A specific example of an acceptable metal post is a commonly available T-post that may be driven into the ground. The present disclosure is not limited to metal posts, including metal T-posts. In some instances, an alternative post (e.g., an existing tree or the like) may be used as one or more of the posts 24.

The potential for a post 24 to be dislodged from the ground (e.g. after multiple animal impacts, etc.) is a typically a function of factors that include the ground condition and the lengthwise portion of the post 24 (e.g., first lengthwise portion 54) disposed in the ground. A post 24 driven into compact, hard ground is less likely to be dislodged than a post 24 driven into soft ground. As is described herein, when the present disclosure trap 20 is in a set configuration it is preferable (but not required) to place the upper cord 30 of the net structure 22 in tension. If the ground conditions are hard, and the posts 24 possess sufficient mechanical strength to avoid substantial elastic deflection, it may be possible to place the upper cord 30 in tension using the posts 24 and net structure 22 alone.

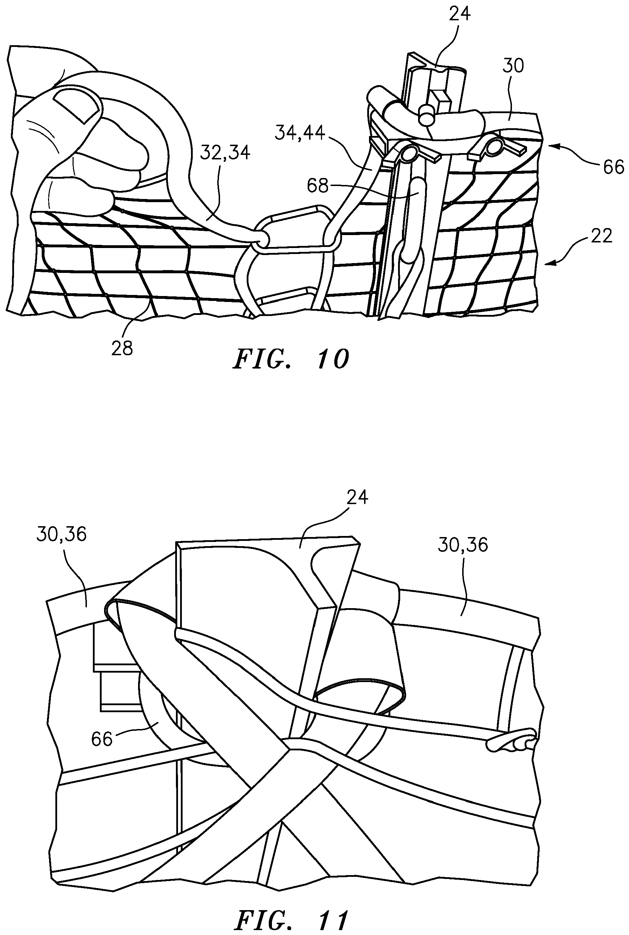

Referring to FIGS. 5, 6, and 8, in some embodiments of the present disclosure, however, the trap 20 may include tensioning structures 58 for attachment to one or more of the posts 24 to facilitate placing and maintaining the upper cord 30 in tension. In fact, the tensioning structures 58 can be used to produce the desired tension in the upper cord 30 by pulling the cord radially outward. To be clear, however, not every embodiment of the present disclosure trap 20 requires tensioning structures 58. In those embodiments that do utilize tensioning structures 58, each respective post 24 preferably has a separate tensioning structure 58. A tensioning structure 58 may include a cleat 60 that is securable to the ground and a tensioning strap 62 that can be deployed between the post 24 and the ground cleat 60. The tensioning straps 62 preferably include a mechanism 64 that can be used to decrease the length of the tensioning strap 62 (e.g., the length between the ground cleat 60 and the post 24) and thereby apply a radially outward force to the post 24. A variety of different type tensioning strap 62 materials may be used; e.g., fabric straps, rope straps, cable straps, etc. For those embodiments that include a mechanism 64 for adjusting the length of the strap 62, a variety of different mechanisms 64 can be used; e.g., ratchets, cam devices, turnbuckles, etc. The present disclosure is not limited to any particular type of tensioning strap 62 or mechanism 64 for changing the length of a strap (when included). An example of hardware that may be used to connect a tensioning strap 62 to a post 24 is shown in FIGS. 7, 9, and 10. The hardware includes a clamp 66 and a J-hook 68. The J-hook 68 shown in FIGS. 7, 9, and 10, includes an open hook portion 70 and a closed eye 72. The clamp 66 may be used to secure the open hook portion 70 to the post 24 and the tensioning strap 62 can be connected to the closed eye 72. This hardware configuration is a non-limiting example of inexpensive hardware that can be used to secure the tensioning strap 62 to the post 24. This hardware also provides a desirable means for securing the upper cord 30 to the post 24. As described below and shown in FIGS. 7 and 10, the upper cord 30 may be disposed around the exterior of the post 24 and within the open hook portion 70 to inhibit the upper cord 30 from being dislodged from the post 24.

Embodiments of the present animal trap 20 are typically configured to be assembled as a substantially circular structure. At the top of the animal trap 20 (e.g., at the upper cord 30), the "circular structure" may in fact be closer to polygonal shape dictated by the number of posts 24; e.g., an animal trap 20 that has eight posts 24 may have a substantially octagonal shape at the upper cord 30, or one having ten posts 24 may have a substantially decagonal shape (as shown in FIG. 2), etc. For ease of description herein, the shape will be referred to as a substantially circular structure having a diameter and circumference. The maximum diameter / circumference of the animal trap 20 is at the upper cord 30 / upper lateral edge 36. In the set configuration, the net structure 22 initially extends substantially downwardly away from the upper cord 30, and then arcuately transitions radially inward, with the ground portion 50 disposed on the ground, terminating at the lower lateral edge 38. As a result, diameter / circumference of the net structure 22 at the lower lateral edge 38 is substantially smaller than the diameter / circumference at the upper lateral edge 36 / upper cord 30. To accommodate the differences in diameter / circumference, at least a portion of the net structure 22 (e.g., the ground portion 50) may have a tapered configuration that produces the smaller diameter at the lower lateral edge 38; e.g., see FIG. 3. Alternatively, the net structure 22 may have the same circumferential length at the upper cord 30 and at the lower lateral edge and portions 74 of the ground portion 50 may be "cinched up" (e.g., folded over onto itself and coupled with fasteners - see FIG. 3 A) to create a smaller diameter /circumference at the lower lateral edge 38. The difference in diameter / circumferential length between the upper lateral edge 36 / upper cord 30 and the lower lateral edge 38 helps to maintain the ground portion 50 of the net structure 22 in contact with the ground, and helps to prevent any section of the net structure 22 from being pushed radially outward beyond the posts 24.

In those net structure 22 embodiments that include a mid-cord 40, the diameter / circumference of the net structure 22 at the mid-cord 40 may be less than the diameter / circumference of the net structure 22 at the upper cord 30. A smaller net structure 22 diameter / circumference at the mid-cord 40 may assist in creating an inward radial curvature of the net structure 22 (e.g., see FIGS. 5 and 6) that facilitates animal entry into the trap 20 as will be described below.

In some embodiments, the net structure 22 has independent lengthwise ends 32, 34 that can be brought together to close the circumference of the animal trap 20. In other embodiments, the net structure 22 may have a "closed" configuration, wherein the net structure 22 is formed with lengthwise ends 32, 34 that are attached to one another, not purposefully separable. An advantage of present disclosure animal traps 20 having a net structure 22 with independent lengthwise ends 32, 34 is that the net structure 22 can be disposed around natural features present where the trap 20 is being set up; e.g., a tree and/or brush can be disposed in the interior region 26 of the trap 20, and the trap 20 closed around them.

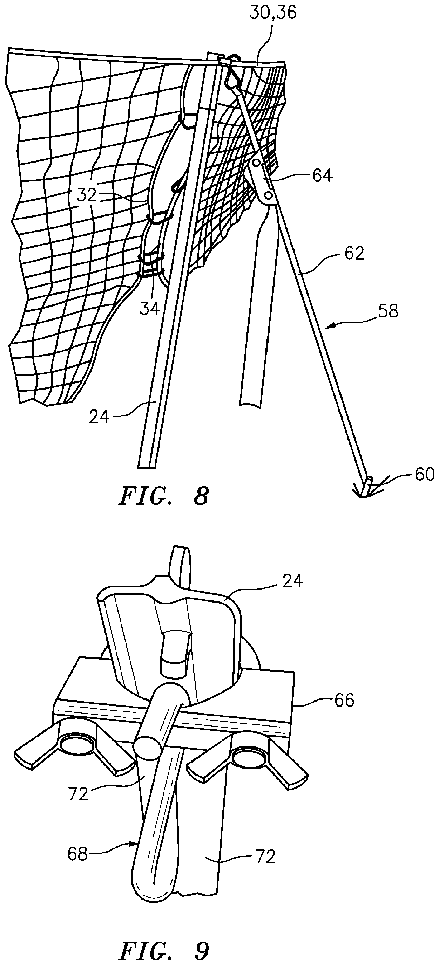

In those embodiments wherein the lengthwise ends 32, 34 of the net structure 22 are independent of one another, the lengthwise ends 32, 34 of the net structure 22 may be attached to one another in an abutting manner to close the net structure 22 (e.g., see FIG. 8). Alternatively, the net structure 22 may be set up with portions of the net structure 22 adjacent the lengthwise ends 32, 34 overlapping one another, with each lengthwise end attached to the net structure 22 (e.g., at a rib cord 44). The ability of the net structure 22 to be set up with portions of the net structure 22 overlapping one another, permits the user to alter the diameter / circumference of the animal trap 20.

Regardless of whether the animal trap 20 is set up so that the lengthwise ends 32, 34 of the net structure 22 abut or overlap one another, the upper cord 30 is configured to create a fixed circumference. For example, as shown in FIGS. 10 and 11, the net structure 22 may be configured with a rib cord 44 disposed at each lengthwise end 32, 34 that is connected to the upper cord 30 (e.g., the rib cord 44 is integral with the upper cord 30), thereby forming an upper corner of the net structure 22. In these embodiments, the upper corner of the net structure 22 at each lengthwise end 32, 34 is looped around the exterior of a post 24. In those embodiments that use the J-hook 68 hardware, the upper corner of each lengthwise end 32, 34 may be captured within the open hook portion 70 of the J-hook 68 to inhibit the upper cord 30 from being dislodged from the post 24. Alternatively, mechanical fasteners (e.g., snap clips, carabiner clips, clamps, or the like) may be used to attach the upper cord 30 to itself to establish the fixed circumference.

When the upper cord 30 is configured with a fixed circumference and placed in tension, the upper cord 30 gives the animal trap 20 a structural integrity with a desirable hoop strength. As stated above, in some instances the posts 24 may be installed in such a fashion that no tensioning structures 58 are required, and the upper cord 30 may be placed in tension around the posts 24. In other instances, tensioning structures 58 may be used to draw the posts 24 radially outward and thereby place the upper cord 30 in tension. Regardless of how the upper cord 30 is tensioned, the tension produces circumferential stress (sometimes referred to as "hoop stress") within the upper cord 30. The circumferential stress gives the upper cord 30, and therefore the net structure 22, a hoop structural integrity that resists forces acting on the net structure 22; e.g., radially outward forces produced by animals trapped within the interior region 26 of the trap 20 impacting a segment of the net structure 22. Although a portion of the net structure 22 impacted by an animal may deflect radially outward to a limited degree, the hoop configuration of the net structure 22 distributes some amount of the impact energy to the circumferential remainder of the net structure 22.

Additional mechanical fasteners may be used to hold the remainder of the lengthwise ends 32, 34 of the trap 20 between the upper lateral edge 36 and the lower lateral edge 38 together; e.g., see FIG. 8. There are a variety of different ways in which the lengthwise ends 32, 34 may be held together, and the present disclosure is not, therefore, limited to any particular configuration for holding the lengthwise ends 32, 34 together.

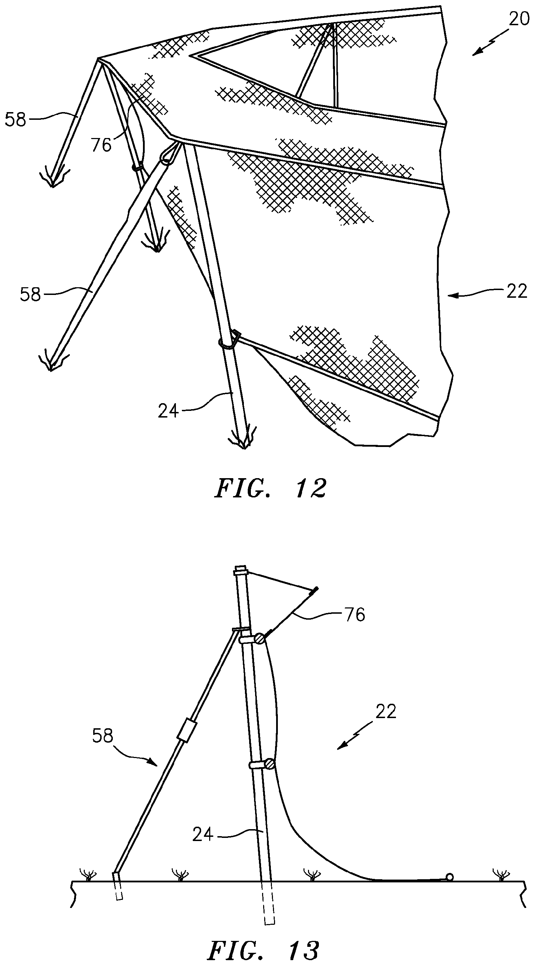

Referring to FIGS. 12 and 13, in some embodiments the animal trap 20 may include an upper edge panel 76 that extends around the circumference of the trap 20, and extends a distance radially inward from the upper cord 30 to inhibit any attempt by a trapped animal to exit the trap 20 over the net structure 22. In the embodiment shown in FIG. 12, the upper edge panel 76 is attached around the circumference of the animal trap 20 and placed in tension. As a result, the upper edge panel 76 resides substantially horizontal. In the embodiment shown in FIG. 13, the upper edge panel 76 is attached around the circumference of the animal trap 20 adjacent the upper cord 30, and is also attached to each post 24 at a position above the upper cord 30. As a result, the upper edge panel 76 extends both radially inwardly and upwardly. The embodiments shown in FIGS. 12 and 13 are provided to show non-limiting examples of how an upper edge panel 76 may be configured, and the present disclosure is not limited thereto.

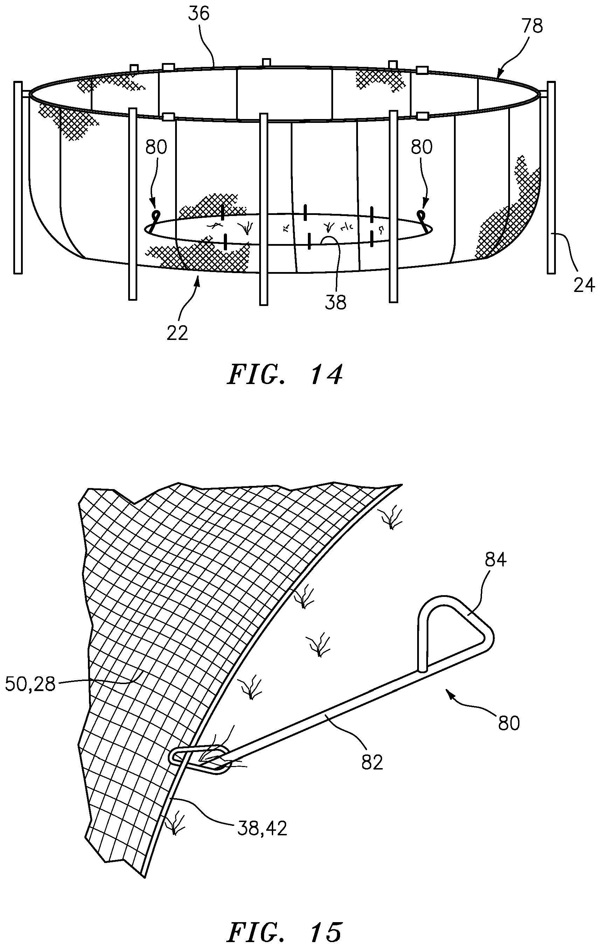

FIG. 14 illustrates an embodiment of the present disclosure that includes a structural ring 78 disposed at the upper lateral edge 36 of the trap. The structural ring 78 (e.g., made of tubing, or a solid rod) may be used as an alternative to the upper cord 30, with the upper lateral edge 36 of the net structure 22 attached to the structural ring 78. The structural ring 78 may be produced in circumferential subsections for ease of transport / storage, and those circumferential subsections attached to one another on-site to form the structural ring 78.

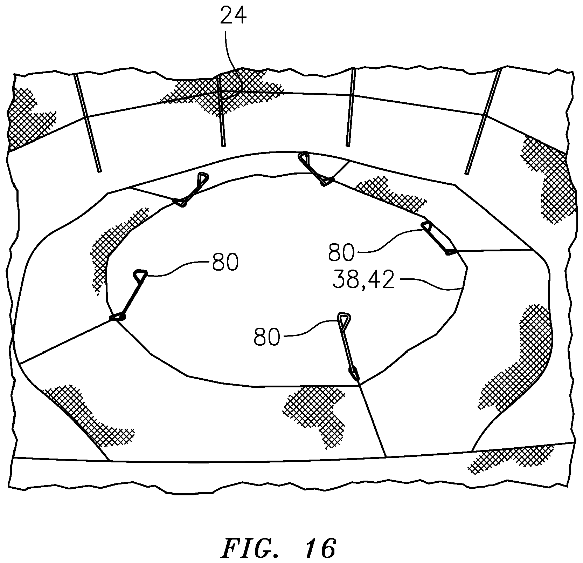

In some embodiments, the animal trap 20 may include one or more anchoring devices configured for engagement with the lower lateral edge 38 and operable to assist in maintaining the position of the ground portion 50 of the net structure 22. A non-limiting example of an anchoring device is an anchor stake 80 that can be deployed at the lower lateral edge 38 to assist in maintaining the position of the ground portion 50 of the net structure 22. FIGS. 15 and 16 illustrate an example of an acceptable anchor stake 80, having a body 82 and a head 84 disposed at one end of the body 82. Mechanical fasteners (e.g., snap clips, carabiner clips, or the like) may be used to connect the lower lateral edge 38 to the respective anchor stake 80. The body 82 is configured to be received within the mechanical fastener and can be driven into the ground. The head 84 of each anchor stake 80 is preferably configured so that the mechanical fastener cannot pass over the head 84. Alternatively, the body 82 of each anchor stake 80 can be configured to pass through an opening 46 in the net 28, and the head 84 configured so it cannot pass through an opening 46 in the net 28 (thereby obviating the need for fasteners). In the installed position, the net 28 is allowed to slide up and down the anchor stakes 80. The anchor stakes 80 ensure that the ground portion 50 remains positioned towards the center of the trap interior region 26. The present disclosure is not limited to anchor stakes 80, and other anchoring devices may be used alternatively. For example, the lower lateral edge 38 may be attached to cleat driven into the ground. A rope (or cord, cable, etc.) loosely connected to the lower lateral edge 38 will allow the net 28 to be pushed upwardly when the animal enters the trap, but will limit the travel of the lower lateral edge away from the center of the trap 20.

As is clear from above, the present disclosure animal trap 20 embodiments are readily portable and can be transported to regions both accessible and inaccessible by conventional vehicles (e.g., cars, SUVs, trucks, etc.). Once a trap site is selected, the perimeter of the animal trap 20 may be established and the posts 24 installed in the ground. As stated above, in some instances a "natural" post (e.g., an existing tree or the like) may be used as one or more of the posts 24.

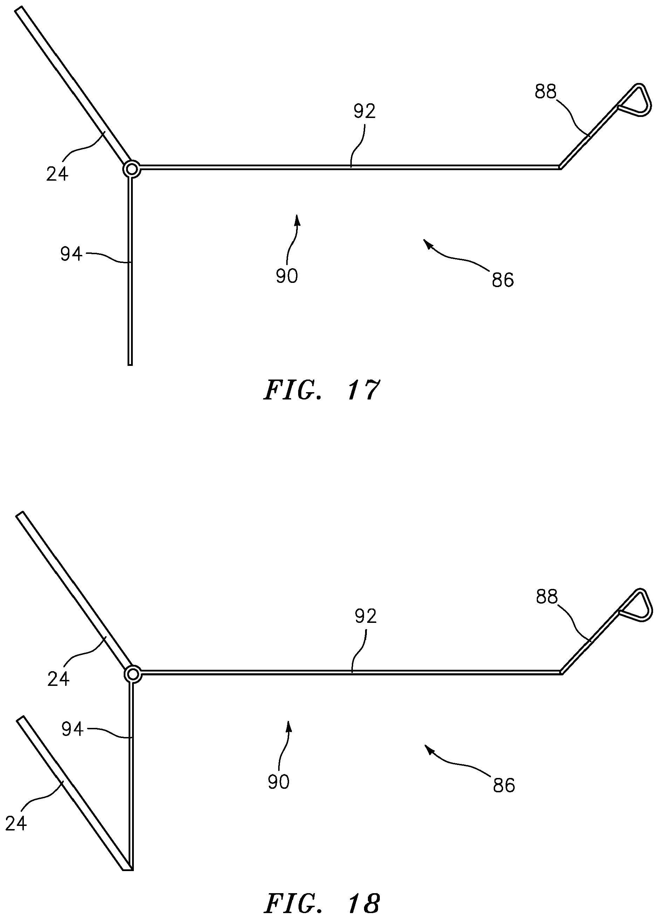

Referring to FIGS. 17 and 18, some embodiments of the present disclosure trap are provided with a tool 86 for spacing the posts 24 apart from one another and facilitating the installation of the trap 20. The tool 86 utilizes a center stake 88 driven into the ground at the geometric center of the trap 20, and a measuring strap 90. The measuring strap 90 includes a radial member 92 and a circumferential member 94. A pivot ring is disposed at one end of the radial member 92, and one end of the circumferential member 94 is attached to the opposite end of the radial member 92. To install the first post 24, the pivot ring is disposed around the center stake 88 for pivotal movement. The radial member 92 is pulled taut radially outward. The outer end of the radial member 92 defines a first post 24 position. To establish a second, adjacent post 24 position, an end of the circumferential member 94 (opposite the end attached to the radial member 92 is connected to the first post 24. The radial member 92 and the circumferential member 94 are drawn taut (now substantially "L" shaped), and the point of attachment between the radial member 92 and the circumferential member 94 defines the next post 24 position. This process is repeated until all of the posts 24 are located and installed into the ground. The post to post spacing is typically chosen based on the application (i.e., what animal is to be trapped), and more specifically the post to post spacing is chosen to facilitate animal entry, but close enough to prevent escape.

Once the posts 24 are installed, the net structure 22 may be drawn around the trap circumference established by the installed posts 24, the lengthwise ends 32, 34 of the net structure 22 attached to one another (e.g., by mechanical fasteners), and the upper cord 30 may be attached to the posts 24 as described above; e.g., looped around the exterior of the respective post 24. In those embodiments that include J-hooks 68, the upper cord 30 may be disposed in the open hook portion 70 of the J-hook 68 to inhibit the upper cord 30 from being dislodged from the post 24. If J-hooks 68 are not utilized, an alternative mechanism may be used to maintain the upper cord 30 at the desired position on the post 24. Once the upper cord 30 is attached to all of the posts 24, the upper cord 30 may be drawn into tension; e.g., by using the tensioning structures 58 in a coordinated manner to draw the upper cord 30 of the net structure 22 into tension and provide the desirable hoop strength.

The lower lateral edge 38 of the net structure 22 may be positioned centrally in the interior of the trap 20 before or after the upper cord 30 is brought into tension. In those embodiments that utilize anchor stakes 80 (or other anchoring device), a number of anchor stakes 80 adequate to centrally maintain the lower lateral edge 38 are installed, but not so many so as to inhibit animal ingress into the trap 20. Typically, an anchor stake 80 disposed every other post 24 works well. As stated above, mechanical fasteners (e.g., snap clips, carabiner clips, or the like) may be used to connect the lower lateral edge 38 to the respective anchor stake 80. Once the anchor stakes 80 are installed, the net 28 is allowed to slide up and down the anchor stakes 80, and the heads 84 of the stakes 80 prevent the net 28 from dislodging.

In those embodiments that include a mid-cord 40, the mid-cord 40 may be connected to each post 24 by a mechanical fastener (e.g., a ratchet strap; see FIG. 8). Preferably, the fastener is configured so that the mid-cord 40 can move lengthwise some amount during use of the animal trap 20 and the net structure 22 at the mid-cord 40 is therefore not fixed to the post 24; i.e., the mid-cord 40 is able to slide some amount. Advantages of this type of connection are described below.

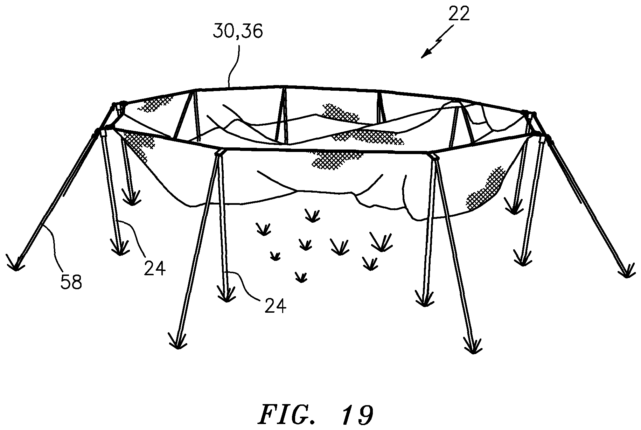

After the animal trap 20 is initially set up, the net structure 22 may be configured in a "pre-set" configuration that allows the animals to travel under the net structure 22 (i.e., all or only portions of the net 28 may be held up off the ground) and therefore into and out of the trap 20 interior region 26 without obstruction. e.g., see FIG. 19. Bait placed on the ground in the interior region 26 of the trap 20 will draw the animals into the trap 20. The process of maintaining the trap 20 in a pre-set configuration with bait disposed in the trap 20 interior region 26 will allow the animals to become accustomed to the trap 20. In the case of feral swine, it is known that feral swine are intelligent animals that are very cautious around unknown structures. Pre-setting the trap 20 often greatly improves the number of animals that can be caught in a single setting simply by improving the confidence of the animals relative to the trap 20. Pre-setting is not required, however, for the present disclosure animal trap 20 to work effectively.

Once the operator is ready to capture animals, some amount of bait is disposed in the interior region 26 of the trap 20 and the net structure 22 is closed (e.g., the lengthwise ends 32, 34 of the net structure 22 attached to one another, and the ground portion 50 secured to the ground; i.e., the set configuration). As can be seen in FIGS. 1, 5, and 6, in this set configuration, at least a portion of the wall portion 48 curves radially inwardly and eventually contacts the ground. The inward radial curvature of the wall portion 48 is understood to facilitate animal entry into the trap 20. The collapsible, flexible, and lightweight nature of the net structure 22 allows animals to work their way under the net structure 22 with minimal resistance, past the lower lateral edge 38 of the net structure 22, to access the bait. Feral swine, in particular, naturally root with their snouts, and this rooting behavior will naturally raise some of the wall portion 48 and the ground portion 50, thereby providing access to the interior region 26 of the animal trap 20. Once the animal has traveled completely under the net structure 22, gravity causes the net structure 22 to fall back to the ground and the animal is trapped. In contrast to solid cage traps or corral traps formed from stiff wire fencing that only permit ingress through a particular door structure, the present disclosure trap 20 allows an animal to enter the trap 20 at any circumferential position of the trap 20. This aspect is believed to increase the confidence of the animals being trapped and consequently the yield of the trap 20.

As can be seen from the description above, some present disclosure animal trap 20 embodiments - once set up - do not require any human intervention. This is in direct contrast to corral or box trap systems that require an operator to actuate the trap door to trap the animals.

Once the animals are trapped, it is not uncommon for the animals to attempt to escape the trap 20. As indicated above, these attempts often take the form of charging the net structure 22 or attempting to chew through the net structure 22. The hoop strength of the animal trap 20 created by tensioning the upper cord 30 (or using a structural ring 78) inhibits the trapped animals from knocking down any portion of the trap 20. In the case of feral swine, the impacts are typically in the wall portion 48 of the net structure 22. In those embodiments that include a mid-cord 40, the tensioning of the mid-cord 40 may be less than that of the upper cord 30, and the fasteners connecting the mid-cord 40 to the posts 24 allow the mid-cord 40 to slide/travel circumferentially to some degree. As a result, the portion of the net structure 22 impacted by the animal deflects radially outwardly and dissipates at least a part of the impact energy. In addition, however, the mid-cord 40 which extends the entire circumference of the trap 20 also distributes some amount of the impact energy to posts 24 beyond the impact area. Hence, the posts 24 collectively operate to maintain the structural integrity of the trap 20; not just the posts 24 adjacent the impact region. In addition, as the animal approaches the net structure 22, the animal will likely step on the ground portion 50 and their weight will help to anchor the net structure 22 to the ground.

The height of the net structure 22 above the ground is typically great enough so that the animal has no chance of jumping over the wall of the trap 20. In the case of a trap 20 configured to catch feral swine, a wall height of four to eight feet (i.e., 4-8 ft.; 122-244 cm) is typically sufficient. However, as stated above, some embodiments of the present disclosure may include an upper edge panel 76 that extends radially inwardly to increase the difficulty of escape over the wall of the animal trap 20.

Alternative embodiments of the present disclosure animal trap 20 can be configured to be selectively actuable by an operator. For example, some trap 20 embodiments may include one or more actuating devices that hold at least a portion of the net structure 22 off the ground and thereby allow unimpeded access into the interior of the trap. Once a sufficient number of animals are located in the interior region 26 of the trap 20, the actuating devices may be actuated by the operator and the net structure 22 released, allowing it to fall to the ground. The present disclosure is not limited to any particular type of actuating device.

The present disclosure animal trap 20 is substantially lighter than known animal traps configured to trap similar animals. Known feral swine traps are typically made of wood and/or metal and often weigh hundreds of pounds, and are difficult to transport. The present disclosure animal trap 20 is a small fraction of the weight and can be compactly packaged for easy storage or transport. The present disclosure animal trap 20 is substantially less expensive than known animal traps configured to trap similar animals. The net structure 22 of the present disclosure animal trap 20 can enclose a substantial trap area at a much lower cost than solid member cage traps or hardwire corral traps, and does not require an intricate actuable door assembly. The present disclosure animal trap 20 is substantially more versatile than known animal traps configured to trap similar animals. The present disclosure animal trap 20 does not require the trap area to be cleared, and can be used on sloped ground. In fact, the ability of the present animal trap 20 to be used in a vegetated area likely will improve the effectiveness of the trap 20 since the setting is more "natural" and the trap 20 less apparent to the animals being trapped.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

Moreover, while various aspects, features and concepts may be expressly identified herein as being inventive or forming part of a disclosure, such identification is not intended to be exclusive, but rather there may be inventive aspects, concepts, and features that are fully described herein without being expressly identified as such or as part of a specific disclosure, the disclosures instead being set forth in the appended claims. Descriptions of exemplary methods or processes are not limited to inclusion of all steps as being required in all cases, nor is the order that the steps are presented to be construed as required or necessary unless expressly so stated. The words used in the claims have their full ordinary meanings and are not limited in any way by the description of the embodiments in the specification unless specifically indicated otherwise.

## Claims

1. A trap for trapping animals, comprising:
a plurality of posts (24) configured to be secured in a ground surface, each post (24) having a length that includes a first lengthwise portion (54) configured for disposal within the ground surface and a second lengthwise portion (56) configured for disposal above the ground surface; and
a net structure (22) attached to the plurality of posts (24), the net structure (22) having a width that extends between an upper lateral edge (36) and a lower lateral edge (38), and a first length that extends between a first lengthwise end (32) and a second lengthwise end (34) at the upper lateral edge (36), and a second length that extends between the first lengthwise end (32) and the second lengthwise end (34) at the lower lateral edge (38), wherein second length is less than the first length, the net structure (22) including:
a net (28) formed from spaced apart orthogonal members defining openings (46) between said members, the net (28) extending from the upper lateral edge (36) to the lower lateral edge (38), and extending from the first lengthwise end (32) to the second lengthwise end (34); and
an upper cord (30) attached to the net (28) at the upper lateral edge (36) extending the first length of the net (28);
wherein the net structure (22) is configurable in a set configuration, and in the set configuration the net structure (22) is closed defining an interior region (26) of the trap (20), and defining a first circumference at the upper lateral edge (36) and a second circumference at the lower lateral edge (38), and the first circumference is greater than the second circumference; and
wherein in the set configuration the net structure (22) has a wall portion (48) and ground portion (50), and the ground portion (50) is configured to reside on the ground surface; and
the trap includes a plurality of anchoring devices (80), each configured for coupling the lower lateral edge (38) of the net structure (22) with the ground surface in a manner that allows the lower lateral edge (38) to travel vertically up a distance great enough to allow an animal to pass under the net structure (22) and into the interior region (26) of the trap (20) and to fall back to the ground surface after the animal has passed under the net structure (22) and into the interior region (26) of the trap (20), and to limit the travel of the lower lateral edge (38) along the ground surface.

2. The trap of claim 1, wherein in the set configuration the ground portion (50) width is about 25% - 40% of the width of the net structure.

3. The trap of claim 1 or 2, wherein the net structure further comprises a weighted bottom cord (42) attached to the net (28) at the lower lateral edge (38) extending the second length of the net structure (22); and optionally wherein the net structure (22) further comprises a mid-cord (40) attached to the net, extending lengthwise between the first lengthwise end (32) and a second lengthwise end (34), and disposed widthwise between the upper cord (30) and the bottom cord (42).

4. The trap of claim 1 or 2, wherein the net structure further comprises a weighted bottom cord (42) attached to the net (28) at the lower lateral edge (38) extending the second length of the net structure (22), wherein the bottom cord (42) has a weight per unit length and the orthogonal members of the net (28) have a weight per unit length, and the weight per unit length of the bottom cord (42) is greater than the weight per unit length of the orthogonal members; and optionally wherein the net structure (22) further comprises a mid-cord (40) attached to the net (28), extending lengthwise between the first lengthwise end (32) and a second lengthwise end (34), and disposed widthwise between the upper cord (30) and the bottom cord (42).

5. The trap of any of claims 1 to 4, wherein the net structure (22) further comprises a plurality of rib cords (44), each extending lengthwise between the upper lateral edge (36) and the lower lateral edge (38), the rib cords (44) spaced apart from one another along the length of the net (28), optionally wherein each of the plurality of rib cords (44) has a diameter greater than a diameter of the orthogonal members of the net (28) ; and/or further comprising a plurality of tensioning structures (58), wherein each tensioning structure (58) is configured to apply an outwardly radial force to a respective post (24); and/or further comprising an upper edge panel (76) attached to the net structure proximate the upper lateral edge (36), the upper edge panel (76) extending radially inwardly a distance.

6. A method of trapping an animal, comprising:
inserting a plurality of posts (24) into a ground surface, the posts (24) circumferentially spaced apart from one another;
attaching a net structure (22) to the plurality of posts (24), the net structure (22) having a width that extends between an upper lateral edge (36) and a lower lateral edge (38), and a first length that extends between a first lengthwise end (32) and a second lengthwise end (34) at the upper lateral edge (36), and a second length that extends between the first lengthwise end (32) and the second lengthwise end (34) at the lower lateral edge (38), wherein second length is less than the first length, the net structure (22) including a net (28) and an upper cord (30), the net (28) having spaced apart members that define openings (46) between the members, the net (28) extending from the upper lateral edge (36) to the lower lateral edge (38), and extending from the first lengthwise end (32) to the second lengthwise end (34), and the upper cord (30) attached to the net (28) at the upper lateral edge (36) extending the first length of the net (28);
disposing the net structure (22) in a set configuration, and in the set configuration:
the net structure (22) is circumferentially closed defining a trap interior region (26);
the net structure (22) has a first circumference at the upper lateral edge (36) and a second circumference at the lower lateral edge (34), and the first circumference is greater than the second circumference; and
the net structure (22) has a wall portion (48) disposed above the ground surface and therefore not in contact with the ground surface, and a ground portion (50) disposed in contact with the ground surface; and
coupling the lower lateral edge (38) of the net structure (22) to the ground surface with a plurality of anchoring devices (80) in a manner that allows the lower lateral edge (38) to travel vertically up a distance great enough to allow an animal to pass under the net structure (22) and into the interior region (26) of the trap (20) and to fall back to the ground surface after the animal has passed under the net structure (22) and into the interior region (26) of the trap (20), and to limit the travel of the lower lateral edge (38) along the ground surface.

7. The method of claim 6, wherein the ground portion (50) has a width and the ground portion width is about 25% - 40% of the width of the net structure (22).

8. The method of claim 6 or 7, wherein the anchoring device includes one or more anchor stakes.

9. The method of any of claims 6 to 8, further comprising disposing the net structure (22) in a pre-set configuration prior to disposing the net structure (22) in the set configuration, and in the pre-set configuration at least a portion of the net structure (22) ground portion (50) is held off of the ground surface thereby providing at least one passage into and out of the interior region (26) of the trap (20).

10. The method of any of claims 6 to 9, wherein the net structure (22) further comprises a mid-cord (40) attached to the net (28), extending lengthwise between the first lengthwise end (32) and a second lengthwise end (34), and disposed widthwise between the upper lateral edge (36) and a lower lateral edge (38);
wherein in the set configuration the upper cord (30) and the mid-cord (40) are attached to the plurality of posts (24), and the net (28) is curved radially inwardly from the mid-cord (40) to the ground portion; and/or the method further comprising:
providing a plurality of tensioning structures (80);
attaching the tensioning structures (80) to the plurality of posts (24); and
applying an outwardly radial force to a respective post (24) using a respective one of the tensioning structures (80) sufficient to produce tension in the upper cord (30).

## Patentansprüche

1. Falle zum Fangen von Tieren, umfassend:
eine Vielzahl von Pfosten (24), die konfiguriert sind, um in einer Bodenfläche gesichert zu werden, wobei jeder Pfosten (24) eine Länge aufweist, die einen ersten Längsabschnitt (54), der zur Anordnung innerhalb der Bodenfläche konfiguriert ist, und einen zweiten Längsabschnitt (56) beinhaltet, der zur Anordnung oberhalb der Bodenfläche konfiguriert ist; und
eine Netzstruktur (22), die an der Vielzahl von Pfosten (24) angebracht ist, wobei die Netzstruktur (22) eine Breite, die sich zwischen einer oberen Seitenkante (36) und einer unteren Seitenkante (38) erstreckt, und eine erste Länge, die sich zwischen einem ersten Längsende (32) und einem zweiten Längsende (34) an der oberen Seitenkante (36) erstreckt, und eine zweite Länge aufweist, die sich zwischen dem ersten Längsende (32) und dem zweiten Längsende (34) an der unteren Seitenkante (38) erstreckt, wobei die zweite Länge kleiner ist als die erste Länge, wobei die Netzstruktur (22) beinhaltet:
ein Netz (28), das aus beabstandeten orthogonalen Elementen gebildet ist, die Öffnungen (46) zwischen den Elementen definieren, wobei sich das Netz (28) von der oberen Seitenkante (36) zur unteren Seitenkante (38) erstreckt und sich vom ersten Längsende (32) zum zweiten Längsende (34) erstreckt; und
eine am Netz (28) an der oberen Seitenkante (36) angebrachte obere Schnur (30), die sich über die erste Länge des Netzes (28) erstreckt;
wobei die Netzstruktur (22) in einer festgelegten Konfiguration konfigurierbar ist, und die Netzstruktur (22) in der festgelegten Konfiguration geschlossen ist, einen inneren Bereich (26) der Falle (20) definiert, und einen ersten Umfang an der oberen Seitenkante (36), und einen zweiten Umfang an der unteren Seitenkante (38) definiert, und der erste Umfang größer ist als der zweite Umfang; und
wobei die Netzstruktur (22) in der festgelegten Konfiguration einen Wandabschnitt (48) und einen Bodenabschnitt (50) aufweist, und der Bodenabschnitt (50) konfiguriert ist, um auf der Bodenfläche zu verweilen; und
die Falle eine Vielzahl von Verankerungsvorrichtungen (80) beinhaltet, die jeweils zum Koppeln der unteren Seitenkante (38) der Netzstruktur (22) mit der Bodenfläche in einer Weise konfiguriert sind, die es der unteren Seitenkante (38) ermöglicht, sich vertikal um eine Distanz nach oben zu bewegen, die groß genug ist, um es einem Tier zu ermöglichen, unter der Netzstruktur (22) hindurch und in den inneren Bereich (26) der Falle (20) hinein zu gelangen, und auf die Bodenfläche zurückzufallen, nachdem das Tier unter der Netzstruktur (22) hindurch und in den inneren Bereich (26) der Falle (20) hinein gelangt ist, und um die Bewegung der unteren Seitenkante (38) entlang der Bodenfläche zu begrenzen.

2. Falle nach Anspruch 1, wobei die Breite des Bodenabschnitts (50) in der festgelegten Konfiguration etwa 25% - 40% der Breite der Netzstruktur beträgt.

3. Falle nach Anspruch 1 oder 2, wobei die Netzstruktur weiter eine am Netz (28) an der unteren Seitenkante (38) angebrachte beschwerte untere Schnur (42) umfasst, die sich über die zweite Länge der Netzstruktur (22) erstreckt; und wobei die Netzstruktur (22) optional weiter eine mittlere Schnur (40) umfasst, die am Netz angebracht ist, sich der Länge nach zwischen dem ersten Längsende (32) und einem zweiten Längsende (34) erstreckt, und der Breite nach zwischen der oberen Schnur (30) und der unteren Schnur (42) angeordnet ist.

4. Falle nach Anspruch 1 oder 2, wobei die Netzstruktur weiter eine am Netz (28) an der unteren Seitenkante (38) angebrachte beschwerte untere Schnur (42) umfasst, die sich über die zweite Länge der Netzstruktur (22) erstreckt, wobei die untere Schnur (42) ein Gewicht pro Längeneinheit aufweist, und die orthogonalen Elemente des Netzes (28) ein Gewicht pro Längeneinheit aufweisen, und das Gewicht pro Längeneinheit der unteren Schnur (42) größer ist als das Gewicht pro Längeneinheit der orthogonalen Elemente; und wobei die Netzstruktur (22) optional weiter eine mittlere Schnur (40) umfasst, die am Netz (28) angebracht ist, sich der Länge nach zwischen dem ersten Längsende (32) und einem zweiten Längsende (34) erstreckt, und der Breite nach zwischen der oberen Schnur (30) und der unteren Schnur (42) angeordnet ist.

5. Falle nach einem der Ansprüche 1 bis 4, wobei die Netzstruktur (22) weiter eine Vielzahl von Rippenschnüren (44) umfasst, die sich jeweils der Länge nach zwischen der oberen Seitenkante (36) und der unteren Seitenkante (38) erstrecken, wobei die Rippenschnüre (44) entlang der Länge des Netzes (28) voneinander beabstandet sind, wobei jede der Vielzahl von Rippenschnüren (44) optional einen Durchmesser aufweist, der größer ist als ein Durchmesser der orthogonalen Elemente des Netzes (28); und/oder weiter eine Vielzahl von Spannstrukturen (58) umfassend, wobei jede Spannstruktur (58) konfiguriert ist, um eine nach außen gerichtete radiale Kraft an einen jeweiligen Pfosten (24) anzulegen; und/oder weiter eine obere Kantenplatte (76) umfassend, die an der Netzstruktur in der Nähe der oberen Seitenkante (36) angebracht ist, wobei sich die obere Kantenplatte (76) um eine Distanz radial nach innen erstreckt.

6. Verfahren zum Fangen eines Tieres, umfassend:
Einsetzen einer Vielzahl von Pfosten (24) in eine Bodenfläche, wobei die Pfosten (24) in Umfangsrichtung voneinander beabstandet sind;
Anbringen einer Netzstruktur (22) an der Vielzahl von Pfosten (24), wobei die Netzstruktur (22) eine Breite, die sich zwischen einer oberen Seitenkante (36) und einer unteren Seitenkante (38) erstreckt, und eine erste Länge, die sich zwischen einem ersten Längsende (32) und einem zweiten Längsende (34) an der oberen Seitenkante (36) erstreckt, und eine zweite Länge aufweist, die sich zwischen dem ersten Längsende (32) und dem zweiten Längsende (34) an der unteren Seitenkante (38) erstreckt, wobei die zweite Länge kleiner ist als die erste Länge, wobei die Netzstruktur (22) ein Netz (28) und eine obere Schnur (30) beinhaltet, wobei das Netz (28) beabstandete Elemente aufweist, die Öffnungen (46) zwischen den Elementen definieren, wobei sich das Netz (28) von der oberen Seitenkante (36) zur unteren Seitenkante (38) erstreckt, und sich vom ersten Längsende (32) zum zweiten Längsende (34) erstreckt, und wobei sich die obere Schnur (30), die am Netz (28) an der oberen Seitenkante (36) angebracht ist, über die erste Länge des Netzes (28) erstreckt;
Anordnen der Netzstruktur (22) in einer festgelegten Konfiguration, und in der festgelegten Konfiguration:
die Netzstruktur (22) in Umfangsrichtung geschlossen ist, wodurch ein innerer Fallenbereich (26) definiert wird;
die Netzstruktur (22) einen ersten Umfang an der oberen Seitenkante (36) und einen zweiten Umfang an der unteren Seitenkante (34) aufweist, und der erste Umfang größer als der zweite Umfang ist; und
die Netzstruktur (22) einen Wandabschnitt (48), der oberhalb der Bodenfläche angeordnet ist, und daher nicht mit der Bodenfläche in Kontakt steht, und einen Bodenabschnitt (50) aufweist, der in Kontakt mit der Bodenfläche angeordnet ist; und
Koppeln der unteren Seitenkante (38) der Netzstruktur (22) mit der Bodenfläche mit einer Vielzahl von Verankerungsvorrichtungen (80) in einer Weise, die es der unteren Seitenkante (38) ermöglicht, sich vertikal um eine Distanz nach oben zu bewegen, die groß genug ist, um es einem Tier zu ermöglichen, unter der Netzstruktur (22) hindurch und in den inneren Bereich (26) der Falle (20) hinein zu gelangen, und auf die Bodenfläche zurückzufallen, nachdem das Tier unter der Netzstruktur (22) hindurch und in den inneren Bereich (26) der Falle (20) hinein gelangt ist, und um die Bewegung der unteren Seitenkante (38) entlang der Bodenfläche zu begrenzen.

7. Verfahren nach Anspruch 6, wobei der Bodenabschnitt (50) eine Breite aufweist und die Breite des Bodenabschnitts etwa 25% - 40% der Breite der Netzstruktur (22) beträgt.

8. Verfahren nach Anspruch 6 oder 7, wobei die Verankerungsvorrichtung einen oder mehrere Ankerpfähle beinhaltet.

9. Verfahren nach einem der Ansprüche 6 bis 8, das weiter das Anordnen der Netzstruktur (22) in einer vorab festgelegten Konfiguration vor dem Anordnen der Netzstruktur (22) in der festgelegten Konfiguration umfasst, und in der vorab festgelegten Konfiguration mindestens ein Abschnitt des Bodenabschnitts (50) der Netzstruktur (22) von der Bodenfläche ferngehalten wird, wodurch mindestens ein Durchgang in den inneren Bereich (26) der Falle (20) hinein und aus diesem heraus bereitgestellt wird.

10. Verfahren nach einem der Ansprüche 6 bis 9, wobei die Netzstruktur (22) weiter eine am Netz (28) angebrachte mittlere Schnur (40) umfasst, die sich der Länge nach zwischen dem ersten Längsende (32) und einem zweiten Längsende (34) erstreckt und der Breite nach zwischen der oberen Seitenkante (36) und einer unteren Seitenkante (38) angeordnet ist;
wobei in der festgelegten Konfiguration die obere Schnur (30) und die mittlere Schnur (40) an der Vielzahl von Pfosten (24) angebracht sind, und das Netz (28) von der mittleren Schnur (40) radial nach innen zum Bodenabschnitt gekrümmt ist; und/oder wobei das Verfahren weiter umfasst:
Bereitstellen einer Vielzahl von Spannstrukturen (80);
Anbringen der Spannstrukturen (80) an der Vielzahl von Pfosten (24); und
Anlegen, unter Verwendung einer jeweiligen der Spannstrukturen (80), einer nach außen gerichteten radialen Kraft an einen jeweiligen Pfosten (24), die ausreicht, um in der oberen Schnur (30) Spannung zu erzeugen.

## Revendications

1. Piège pour piéger des animaux, comprenant :
une pluralité de poteaux (24) configurés pour être fixés dans une surface du sol, chaque poteau (24) présentant une longueur qui inclut une première partie longitudinale (54) configurée pour être disposée dans la surface du sol et une seconde partie longitudinale (56) configurée pour être disposée au-dessus de la surface du sol ; et
une structure en filet (22) fixée à la pluralité de poteaux (24), la structure en filet (22) présentant une largeur qui s'étend entre un bord latéral supérieur (36) et un bord latéral inférieur (38), et une première longueur qui s'étend entre une première extrémité longitudinale (32) et une seconde extrémité longitudinale (34) au niveau du bord latéral supérieur (36), et une seconde longueur qui s'étend entre la première extrémité longitudinale (32) et la seconde extrémité longitudinale (34) au niveau du bord latéral inférieur (38), dans lequel la seconde longueur est inférieure à la première longueur, la structure en filet (22) incluant :
un filet (28) formé d'éléments orthogonaux espacés définissant des ouvertures (46) entre lesdits éléments, le filet (28) s'étendant du bord latéral supérieur (36) au bord latéral inférieur (38), et s'étendant de la première extrémité longitudinale (32) à la seconde extrémité longitudinale (34) ; et
une corde supérieure (30) fixée au filet (28) au niveau du bord latéral supérieur (36) s'étendant sur la première longueur du filet (28) ;
dans lequel la structure en filet (22) est configurable dans une configuration déployée, et dans la configuration déployée, la structure en filet (22) est fermée définissant une région intérieure (26) du piège (20), et définissant une première circonférence au niveau du bord latéral supérieur (36) et une seconde circonférence au niveau du bord latéral inférieur (38), et la première circonférence est plus grande que la seconde circonférence ; et
dans lequel, dans la configuration déployée, la structure en filet (22) présente une partie paroi (48) et une partie sol (50), et la partie sol (50) est configurée pour rester sur la surface du sol ; et
le piège inclut une pluralité de dispositifs d'ancrage (80), chacun étant configuré pour coupler le bord latéral inférieur (38) de la structure en filet (22) à la surface du sol de manière à permettre au bord latéral inférieur (38) de remonter verticalement sur une distance suffisamment grande pour permettre à un animal de passer sous la structure en filet (22) et dans la région intérieure (26) du piège (20) et de retomber à la surface du sol après que l'animal est passé sous la structure en filet (22) et dans la région intérieure (26) du piège (20), et pour limiter le déplacement du bord latéral inférieur (38) le long de la surface du sol.

2. Piège selon la revendication 1, dans lequel, dans la configuration déployée, la largeur de la partie sol (50) est d'environ 25 %-40 % de la largeur de la structure en filet.

3. Piège selon la revendication 1 ou 2, dans lequel la structure en filet comprend en outre une corde inférieure lestée (42) fixée au filet (28) au niveau du bord latéral inférieur (38) s'étendant sur la seconde longueur de la structure en filet (22) ; et facultativement, la structure en filet (22) comprend en outre une corde médiane (40) fixée au filet, s'étendant dans le sens de la longueur entre la première extrémité longitudinale (32) et une seconde extrémité longitudinale (34), et disposée dans le sens de la largeur entre la corde supérieure (30) et la corde inférieure (42).

4. Piège selon la revendication 1 ou 2, dans lequel la structure en filet comprend en outre une corde inférieure lestée (42) fixée au filet (28) au niveau du bord latéral inférieur (38) s'étendant sur la seconde longueur de la structure en filet (22), dans lequel la corde inférieure (42) présente un poids par unité de longueur et les éléments orthogonaux du filet (28) présentent un poids par unité de longueur, et le poids par unité de longueur de la corde inférieure (42) est supérieur au poids par unité de longueur des éléments orthogonaux ; et facultativement, dans lequel la structure en filet (22) comprend en outre une corde médiane (40) fixée au filet (28), s'étendant dans le sens de la longueur entre la première extrémité longitudinale (32) et une seconde extrémité longitudinale (34), et disposée dans le sens de la largeur entre la corde supérieure (30) et la corde inférieure (42).

5. Piège selon l'une quelconque des revendications 1 à 4, dans lequel la structure en filet (22) comprend en outre une pluralité de cordes nervurées (44), chacune s'étendant dans le sens de la longueur entre le bord latéral supérieur (36) et le bord latéral inférieur (38), les cordes nervurées (44) étant espacées les unes des autres sur la longueur du filet (28), facultativement, dans lequel chacune de la pluralité de cordes nervurées (44) présente un diamètre supérieur à un diamètre des éléments orthogonaux du filet (28) ; et/ou comprenant en outre une pluralité de structures de tension (58), dans lequel chaque structure de tension (58) est configurée pour appliquer une force radiale vers l'extérieur à un poteau respectif (24) ; et/ou comprenant en outre un panneau de bord supérieur (76) fixé à la structure en filet à proximité du bord latéral supérieur (36), le panneau de bord supérieur (76) s'étendant radialement vers l'intérieur sur une certaine distance.

6. Procédé de piégeage d'un animal, comprenant :
l'insertion d'une pluralité de poteaux (24) dans une surface du sol, les poteaux (24) étant espacés de manière circonférentielle les uns des autres ;
la fixation d'une structure en filet (22) à la pluralité de poteaux (24), la structure en filet (22) présentant une largeur qui s'étend entre un bord latéral supérieur (36) et un bord latéral inférieur (38), et une première longueur qui s'étend entre une première extrémité longitudinale (32) et une seconde extrémité longitudinale (34) au niveau du bord latéral supérieur (36), et une seconde longueur qui s'étend entre la première extrémité longitudinale (32) et la seconde extrémité longitudinale (34) au niveau du bord latéral inférieur (38), dans lequel la seconde longueur est inférieure à la première longueur, la structure en filet (22) incluant un filet (28) et une corde supérieure (30), le filet (28) présentant des éléments espacés qui définissent des ouvertures (46) entre les éléments, le filet (28) s'étendant du bord latéral supérieur (36) au bord latéral inférieur (38), et s'étendant de la première extrémité longitudinale (32) à la seconde extrémité longitudinale (34), et la corde supérieure (30) étant fixée au filet (28) au niveau du bord latéral supérieur (36) s'étendant sur la première longueur du filet (28) ;
la disposition de la structure en filet (22) dans une configuration déployée, et dans la configuration déployée :
la structure en filet (22) est fermée de manière circonférentielle définissant une région intérieure de piège (26) ;
la structure en filet (22) présente une première circonférence au niveau du bord latéral supérieur (36) et une seconde circonférence au niveau du bord latéral inférieur (34), et la première circonférence est supérieure à la seconde circonférence ; et
la structure en filet (22) présente une partie paroi (48) disposée au-dessus de la surface du sol et, par conséquent, non en contact avec la surface du sol, et une partie sol (50) disposée en contact avec la surface du sol ; et
le couplage du bord latéral inférieur (38) de la structure en filet (22) à la surface du sol avec une pluralité de dispositif d'ancrage (80) de manière à permettre au bord latéral inférieur (38) de remonter verticalement sur une distance suffisamment grande pour permettre à un animal de passer sous la structure en filet (22) et dans la région intérieure (26) du piège (20) et de retomber à la surface du sol après que l'animal est passé sous la structure en filet (22) et dans la région intérieure (26) du piège (20), et pour limiter le déplacement du bord latéral inférieur (38) le long de la surface du sol.

7. Procédé selon la revendication 6, dans lequel la partie sol (50) présente une largeur et la largeur de partie sol est d'environ 25 %-40 % de la largeur de la structure en filet (22).

8. Procédé selon la revendication 6 ou 7, dans lequel le dispositif d'ancrage inclut un ou plusieurs piquets d'ancrage.

9. Procédé selon l'une quelconque des revendications 6 à 8, comprenant en outre la disposition de la structure en filet (22) dans une configuration avant déploiement avant de disposer la structure en filet (22) dans la configuration déployée, et dans la configuration avant déploiement, au moins une partie de la partie sol (50) de structure en filet (22) est maintenue à l'écart de la surface du sol, fournissant ainsi au moins un passage vers et hors de la région intérieure (26) du piège (20).

10. Procédé selon l'une quelconque des revendications 6 à 9, dans lequel la structure en filet (22) comprend en outre une corde médiane (40) fixée au filet (28), s'étendant dans le sens de la longueur entre la première extrémité longitudinale (32) et une seconde extrémité longitudinale (34), et disposée dans le sens de la largeur entre le bord latéral supérieur (36) et un bord latéral inférieur (38) ;
dans lequel, dans la configuration déployée, la corde supérieure (30) et la corde médiane (40) sont fixées à la pluralité de poteaux (24), et le filet (28) est incurvé radialement vers l'intérieur de la corde médiane (40) à la partie sol ; et/ou le procédé comprenant en outre :
la fourniture d'une pluralité de structures de tension (80) ;
la fixation des structures de tension (80) à la pluralité de poteaux (24) ; et
l'application d'une force radiale vers l'extérieur, à un poteau respectif (24) en utilisant l'une respective des structures de tension (80), suffisante pour produire une tension dans la corde supérieure (30).
